(19) Europäisches Patentamt
European Patent Office
Office européen des brevets

(11) **EP 4 033 211 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **21020028.3**

(22) Anmeldetag: **25.01.2021**

(51) Internationale Patentklassifikation (IPC):
**G01G 17/00** *(2006.01)* **G01G 19/42** *(2006.01)*
**G01G 23/42** *(2006.01)* *G01G 19/414* *(2006.01)*
*G01G 15/00* *(2006.01)* *G01G 23/16* *(2006.01)*

(52) Gemeinsame Patentklassifikation (CPC):
**G01G 17/00; G01G 19/42; G01G 23/42;**
G01G 15/00; G01G 19/4144; G01G 23/166

(54) **ABSICHERUNG UND DOKUMENTATION EINES VERARBEITUNGSPROZESSES VON ROHSTOFFEN ZUR ARZNEIMITTELHERSTELLUNG**

PROTECTION AND DOCUMENTATION OF A MANUFACTURING PROCESS OF RAW MATERIALS FOR DRUG PRODUCTION

SÉCURISATION ET DOCUMENTATION D'UN PROCÉDÉ DE TRAITEMENT DES MATIÈRES PREMIÈRES DESTINÉES À LA FABRICATION DE MÉDICAMENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.07.2022 Patentblatt 2022/30**

(73) Patentinhaber: **Bavaria Weed GmbH**
**82211 Herrsching am Ammersee (DE)**

(72) Erfinder: **Brüning, Anthony**
**37075 Göttingen (DE)**

(74) Vertreter: **Reich, Jochen**
**Herrnstraße 15**
**80539 München (DE)**

(56) Entgegenhaltungen:
**JP-A- H08 178 735     US-A1- 2014 351 250**

**Beschreibung**

Die vorliegende Erfindung betrifft ein Verfahren zum Absicherung und zur Dokumentation eines Verarbeitungsprozesses von Rohstoffen in der Arzneimittelherstellung. Rohstoffe unterliegen in der Arzneimittelherstellung strengen Regularien und entsprechende Herstellungsprozesse und Verarbeitungsschritte müssen streng überwacht und dokumentiert werden. Die vorliegende Erfindung schafft einen automatisierten Prozess, welcher Verarbeitungsmengen genau kontrolliert und durch strenge Anforderungen den Nachteil im Stand der Technik löst, dass entsprechende Dokumentationstechniken und Überwachungsmechanismen technisch aufwendig und dennoch potentiell unsicher sind. Erfindungsgemäß wird ein technisches Verfahren vorgeschlagen, welches sich sogar zur Verarbeitung von Stoffen eignet, welche als Betäubungsmittel eingestuft sind. Die Erfindung ist ferner gerichtet auf eine entsprechend eingerichtete Systemanordnung. Ferner wird ein Computerprogrammprodukt mit Steuerbefehlen vorgeschlagen, welche das vorgeschlagene Verfahren implementieren beziehungsweise die vorgeschlagene Anordnung betreiben.

EP 1 509 752 B2 zeigt eine Vorrichtung zur Betriebszustandsüberwachung für ein gravimetrisches Messgerät, insbesondere eine Waage mit einer Wägezelle, mit einer eine Signalverarbeitungseinrichtung, eine Speichereinrichtung sowie einen Zeitgeber aufweisenden Wägeelektronik, mit einer Ausgabeeinheit sowie mindestens einem elektronischen Neigungssensor, welcher in Kommunikationsverbindung mit der Signalverarbeitungseinrichtung steht.

DE 60 214 991 T2 zeigt Systeme, welche maschinenlesbare Etiketten verwenden, um Daten zu speichern und sie Lesegeräten zu übermitteln, wenn sie gescannt werden. Beispiele sind ein- und zweidimensionale Strichcodes, Memory Buttons, Chipkarten (Smartcards), Radiofrequenz-Identifikations-(RFID-) Tags, Magnetstreifen, Mikrochip-Transponder usw.

DE 10 2010 055 418 A1 zeigt ein Verfahren zum Betrieb einer Ladenwaage wobei bei einem Buchungsvorgang ein Gewichtswert von Wiegegut oder ein manuell eingegebenes Datum mit einer automatisch durch Vergleich von über eine Kamera aufgenommen Bedienerdaten mit vorab gespeicherten Bedienerdaten ermittelten Bedienerkennung verknüpft wird, dadurch gekennzeichnet, dass bei einem Buchungsvorgang das Kamerabild auf das Vorhandensein eines Barcodes durchsucht wird, dessen Daten decodiert und mit der Bedienerkennung verknüpft werden.

Im Stand der Technik wird bei der Verarbeitung von Arzneimitteln, insbesondere von Betäubungsmitteln, das sogenannte Vieraugenprinzip angewendet. Gesetzlich ist vorgeschrieben, dass Arbeitsschritte genauestens dokumentiert werden und insbesondere sind die Mengen der zu verarbeitenden Rohstoffe genau abzuwiegen und zu dokumentieren. Damit kein Verlust bei den Rohstoffen auftritt sieht der Stand der Technik vor, dass keine Person alleine relevante Arbeitsschritte durchführen darf. Das Vorgehen ist sehr aufwendig und personalintensiv. Darüber hinaus ist es auch nicht auszuschließen, dass das Vieraugenprinzip eine angemessene Absicherung bietet.

Bezüglich der verwendeten Waagen sieht der Stand der Technik vor, dass entweder stets die gleichen Waagen für den gleichen Rohstoff verwendet werden oder aber es müssen bestehende Waagen datentechnisch aufgerüstet werden. So ist im Stand der Technik, beispielsweise vorgesehen, dass eine Waage stets für das Abwiegen der Verpackung vorgesehen ist. Eine weitere Waage ist für das Abwiegen eines entsprechenden Rohstoffs vorgesehen. Somit ergibt sich das Problem, dass eine große Anzahl an Waagen bereitgestellt werden muss, welche ebenfalls kostenintensiv ist und einen großen Wartungsaufwand verursacht.

Werden im Stand der Technik dynamische Waagen vorgesehen, also Waagen die unterschiedliche Kategorien, wie beispielsweise Rohstoffe oder Verpackungen, abwiegen, so müssen diese datentechnisch derart aufgerüstet werden, dass beispielsweise ein Sachbearbeiter an der Waage eingibt, welche Kategorie nunmehr gewogen werden soll. Dies ist aber wiederum arbeitsintensiv und zudem fehleranfällig.

Die Herstellung von Arzneimitteln ist ein sehr spezielles technisches Gebiet, welches strikten gesetzlichen Regularien unterliegt. Wünschenswert ist es hierbei, dass eine Unterstützung durch Computeranlagen bereitgestellt werden kann. Diese muss den gesetzlichen Anforderungen entsprechen und insbesondere müssen die Mengen von verschreibungspflichtigen Rohstoffen überprüfbar sein. Generell sieht zwar jedes Land andere gesetzliche Vorschriften vor, diese sind jedoch insoweit harmonisiert, dass verschreibungspflichtige Rohstoffe von der Anlieferung bis zur Verarbeitung dokumentiert werden müssen.

Folglich besteht ein Bedarf an einer effizienten informationstechnologischen Unterstützung bei der Bilanzierung entsprechender Stoffe sowie an einer effizienten Infrastruktur. Darüber hinaus soll die Ausfallsicherheit von einzelnen Waagen dahingehend gewährleistet werden, dass die Infrastruktur auch dann operabel ist, falls mehrere Waagen ausfallen. Nicht nur kann es sich bei den Rohstoffen um verderbliche Waren handeln, sondern vielmehr führt ein Ausfallen einzelner technischer Komponenten im Stand der Technik zu einem Stillstand des Produktionsprozesses insgesamt.

Es ist somit eine Aufgabe der vorliegenden Erfindung ein Verfahren vorzuschlagen, welches ein dynamisches Verwenden von technischen Komponenten vorsieht und beispielsweise bei einem Ausfall einer Waage für einen Ersatz sorgt. Darüber hinaus soll datentechnisch die Bilanzierung von Rohstoffmengen derart genau verfolgbar sein, dass die vorhandenen Mengen an Rohstoffen zu jedem Zeitpunkt nachvollziehbar sind. Ferner ist es eine Aufgabe der vorliegenden Erfindung eine entsprechend eingerichtete Systemanordnung vorzuschlagen. Ferner ist es eine Aufgabe ein Computerprogrammprodukt mit Steuerbefehlen bereitzustellen, welche das Verfahren implementieren beziehungsweise die vorgeschlagene Vorrichtung und Anordnung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zur automatisierten Absicherung und Dokumentation eines Verarbeitungsprozesses von Rohstoffen zur Arzneimittelherstellung vorgeschlagen, aufweisend ein Spezifizieren von mindestens zwei Messkonfigurationen für eine Waage, wobei jede Messkonfiguration eine Wägegutbezeichnung und ein Soll-Messergebnis mitsamt einem tolerierten Abweichungswert definiert; ein Erzeugen eines tatsächlichen Messergebnisses durch die Waage und datentechnisches Abspeichern des Messergebnisses in einer der Waage entfernt angeordneten Überwachungskomponente; ein Zuordnen des erzeugten tatsächlichen Messergebnisses zu der Wägegutbezeichnung in Abhängigkeit eines Vergleichens des tatsächlichen Messergebnisses und des Soll-Messergebnisses mitsamt des Abweichungswerts in der Überwachungskomponente; und ein datentechnisches Abspeichern des Messergebnisses mitsamt der Wägegutbezeichnung zur Dokumentation eines arzneimitteltechnischen Verarbeitungsprozesses in der entfernt angeordneten Überwachungskomponente.

Das vorgeschlagene Verfahren bietet eine Dokumentation der einzelnen Rohstoffmengen, welche potenziell dem Betäubungsmittelgesetz unterliegen. Erfindungsgemäß werden also ein Verfahren und eine Systemanordnung vorgeschlagen, welche es erlauben, dass entsprechende Messergebnisse in konformer Weise erzeugt werden und sodann gesichert werden. Das vorgeschlagene Verfahren fügt sich in bestehende Prozesse ein und bietet eine informationstechnische Unterstützung bei der Bilanzierung von Rohstoffen bzw. Rohstoffmengen. Auch können Zwischenprodukte und Endprodukte entsprechend abgewogen werden und in dem zugrunde liegenden System dokumentiert bzw. abgespeichert werden.

Darüber hinaus ist eine Automatisierung derart geboten, dass der Benutzer nicht einstellen muss, ob es sich bei der zu wiegenden Ware um einen Rohstoff oder um eine Verpackung handelt, sondern vielmehr kann das System selbsttätig dies ermitteln. Dies bietet zudem den Vorteil, dass eine Waage nicht auf eine Kategorie, also einen Rohstoff bzw. Verpackung, beschränkt ist. Vielmehr kann die eine Waage entweder einen Rohstoff oder eine Verpackung wiegen und das System erkennt dies selbsttätig.

Die Verarbeitungsprozesse beziehen sich auf Rohstoffe, welche zu Endprodukten bzw. Zwischenprodukten führen. Diese Zwischenprodukte können selbst wieder Rohstoffe darstellen für einen weiteren Verarbeitungsschritt und wiederum zu weiteren Zwischenprodukten bzw. Endprodukten führen. Generell bezieht sich die vorgeschlagene Erfindung auf die Arzneimittelherstellung, so dass typischerweise in einem Bereich von mehreren Gramm bzw. wenigen Kilogramm gearbeitet wird. Somit können die verwendeten Waagen beispielsweise als Feinwaagen bezeichnet werden.

Erfindungsgemäß ist ein Spezifizieren von mindestens zwei Messkonfigurationen für jeweils eine Waage vorgesehen. Jeweils eine Waage bezieht sich darauf, dass eine Waage eine Messkonfiguration zugeordnet bekommt. Generell sind für eine Waage zwei Messkonfigurationen oder mehrere Messkonfigurationen möglich, wobei tatsächlich zur Laufzeit stets eine Messkonfiguration ausgewählt wird. Dies erfolgt in einem darauffolgenden Verfahrensschritt. Es können beispielsweise drei Messkonfigurationen vorgehsehen sein, für Rohstoff, Verpackung und Rohstoffbeutel. Da für die Bilanz grob gelten soll: Rohstoffbeutel = Rohstoff + Verpackung. Ein Rohstoffbeutel ist ein geschlossener Beutel der Rohstoff enthält.

Jede Messkonfiguration definiert eine Wägegutbezeichnung und ein Soll-Messergebnis mitsamt einem tolerierten Abweichungswert. Bei der Wägegutbezeichnung handelt es sich um eine textuelle Bezeichnung des zu wiegenden Materials bzw. Körpers. So kann diese Bezeichnung vorsehen, dass ein Rohstoff, eine Verpackung oder beides gemessen wird. So kann diese Bezeichnung beispielsweise den Wert "Rohstoff" einnehmen. Ein Soll-Messergebnis stellt darauf ab, dass in dem Prozess bereits definiert ist, welche Größe zu erwarten ist. Aufgrund von technischen Ungenauigkeiten bzw. Gewichtsschwankungen im Rohstoff ist zudem ein tolerierter Abweichungswert vorzusehen. Bei dem tolerierten Abweichungswert kann es sich um einen Toleranzbereich handeln, der wenige Gramm ausmachen kann bzw. kann dieser Wert auch relativ definiert werden. So kann eine Gewichtsschwankung im einstelligen Prozentbereich vorzusehen seien.

Beispielsweise werden vorliegend Rohstoffe gewogen, welche typischerweise in Chargen von jeweils 50 g geliefert werden. Darüber hinaus ist für diese eine Charge eine Verpackung von ca. 20 g vorzusehen. Somit sind also die Soll-Messergebnisse definiert. Trifft nunmehr eine Ware mit 70 g ein, so kann es sich um einen Rohstoff von 50 g in einer Verpackung von 20 g handeln. Der Rohstoff wird mitsamt Verpackung abgewogen und in einem Idealfall entsteht tatsächlich eine Messung von 70 g. Aufgrund der unterschiedlichen Messkonfigurationen ist im System hinterlegt, dass ein Rohstoff mitsamt Verpackung 70 g wiegen kann. Somit kann diese Messkonfiguration zugeordnet werden und die Wägegutbezeichnung lautet "Rohstoff in Verpackung". Soll nunmehr der Rohstoff an sich gewogen werden, so wird der Rohstoff auf die Waagschale ausgeschüttet und in einem Idealfall zeigt das Messergebnis 50 g an. Somit wird die Messkonfiguration für "Rohstoff" ausgewählt.

Dieses Beispiel verdeutlicht, dass ein Erwartungswert gegeben wird und entsprechend kann das System bzw. das vorgeschlagene Verfahren selbsttätig erkennen, um welche Kategorie von abzuwiegenden Körper es sich handelt. Dies setzt voraus, dass die Gewichtsbereiche im Wesentlichen disjunkt sind. Falls nicht, so ist dies der Ausnahmefall welcher vorab ebenfalls bekannt ist. Sodann kann für jede Kategorie eine gesonderte Waage verwendet werden.

Typischerweise überwiegt das Gewicht des Rohstoffes bei weiten das Gewicht der Verpackung. Somit kann bereits in Abhängigkeit des Messergebnisses festgestellt werden, um welches Material es sich handelt. Dies ermöglicht es, eine einzige Waage für mehrere Kategorien vorzusehen. Sodann können mehrere Messkonfigurationen hinterlegt werden. Zum Beispiel gibt es additiv eine Rohstoffmenge von 1000 g, welche in einer Verpackung zu 100 g geliefert wird. Somit besteht eine Messkonfiguration mit einem Sollwert von 1000 g mit der Bezeichnung "Rohstoff". Eine weitere Messkonfiguration wird vorgesehen mit einem Erwartungswert von 100 g und der Bezeichnung "Verpackung". Da im Bereich der Arzneimittelverarbeitung entsprechende Gewichtsgrößen und Chargen bekannt sind, kann das vorgeschlagene Verfahren entsprechend in vorbereitenden Verfahrensschritten konfiguriert werden.

Der Toleranzbereich gibt an, wann eine Charge nicht mehr verwendet werden kann. Wird beispielsweise ein Rohstoff entwendet, so liegt die Rohstoffangabe unterhalb des Erwartungswerts und unterschreitet sogar den Toleranzbereich. Dies wird erfindungsgemäß erkannt und es wird eine Fehlermeldung ausgegeben. Gleiches gilt für Verunreinigungen in dem Rohstoff, sodass die zu erwartende Menge überschritten wird. Dies gibt ebenfalls eine Fehlermeldung aus. Darüber hinaus kann erfindungsgemäß eine Beschädigung in der Verpackung erkannt werden. Ist beispielsweise ein Teil der Verpackung abgesplittert, so unterschreitet die Verpackung das soll Messergebnis und unterschreitet typischerweise auch den Toleranzbereich. Somit kann diese Charge zurückgewiesen werden.

Durch das Messen erfolgt ein Erzeugen eines tatsächlichen Messergebnisses durch die Waage. Das Messergebnis wird typischerweise in Gramm gemessen bzw. in wenigen Kilogramm. Sobald das Messergebnis vorliegt erfolgt ein Abspeichern ebendieses Messergebnisses in einer entfernt angeordneten Überwachungskomponente. Somit muss die Waage lediglich zum Wiegen eingerichtet sein und muss lediglich über eine Datenschnittstelle verfügen. Somit wird es erfindungsgemäß vermieden, dass die Waage selbst Datenverarbeitungskomponenten bereitstellen muss. Folglich kann eine herkömmliche Waage verwendet werden, welche lediglich datentechnisch ausgelesen werden kann. Bei der Kommunikationsschnittstelle kann es sich um eine schnurlose oder drahtgebundene Kommunikationsleitung handeln. So können beispielsweise entsprechende Daten über WLAN oder Bluetooth an ein tragbares Endgerät übermittelt werden.

Bei der Überwachungskomponente kann es sich um einen Server handeln, welcher entsprechend abgesichert ist. So ist sicherzustellen, dass unbefugte Dritte keinen Zugriff auf die Daten bekommen. Darüber hinaus muss der Server, also die Überwachungskomponente, datentechnisch derart abgesichert sein, dass unbefugte Mitarbeiter keine Werte manipulieren können. Dies kann beispielsweise über ein Rechtemanagement erfolgen.

Das Zuordnen des erzeugten tatsächlichen Messergebnis zu der Wege gut Bezeichnung erfolgt in Abhängigkeit eines Vergleichens des tatsächlichen Messergebnisses und des soll Messergebnis unter Berücksichtigung des Toleranzbereichs. Typischerweise befinden sich also die Messergebnisse in einem vorab bestimmten Bereich und können somit mittels dieses Bereichs der Messkonfiguration einer Bezeichnung zugeordnet werden. So erfasst das vorgeschlagene Verfahren selbsttätig, um welche Ware es sich handelt. Eine Ware kann hierbei ein Rohstoff, eine Verpackung oder beides sein. Ist für das tatsächliche Messergebnis kein Bereich vorgesehen, so wird eine Fehlermeldung ausgegeben. Werden beispielsweise nur Chargen von 100 g oder 1000 g erwartet, so liegt ein Fehler bei einer Messung von 500 g vor. Hier ist davon auszugehen, dass es sich um eine 1000 g Charge handelt, welche jedoch beschädigt wurde. Somit kann die einzelne Charge oder auch additiv dazugehörige Chargen zurückgewiesen werden. Wird der Rohstoff auf einer Palette geliefert, so kann erfindungsgemäß vorgesehen werden, dass bei einer beschädigten Dose die gesamte Palette zurückgewiesen wird.

Das Messergebnis wird datentechnisch abgespeichert und die Wägegutbezeichnung wird ebenfalls abgespeichert. Dies schließt nicht aus, dass weitere Informationen abgespeichert werden. Ein Beispiel für dieses Abspeichern ist es, dass zu einer bestimmten Uhrzeit ein Rohstoff von 1000 g geliefert wurde. Darüber hinaus kann die Verpackung mitsamt Rohstoff gemessen werden bzw. nur die Verpackung zur Gegenkontrolle. Somit erfasst die vorgeschlagene Erfindung selbsttätig, was nunmehr gewogen wurde. Folglich kann eine Waage mehrere Funktionen übernehmen. Bei einem Ausfall einer Waage kann diese ganz einfach durch eine andere Waage ersetzt werden. Dies überwindet den Nachteil im Stand der Technik, dass eine Waage stets für Rohstoffe bzw. eine Waage stets für die Verpackung vorzusehen ist. Die erfindungsgemäßen Waagen bzw. das Ansprechen der Waagen erfolgt derart, dass automatisiert identifiziert werden kann, was denn nunmehr gewogen wird.

Gemäß einem Aspekt der vorliegenden Erfindung ist jedes erzeugte tatsächliche Messergebnis anhand dessen Messwerts im Wesentlichen eindeutig identifizierbar. Dies hat den Vorteil, dass der Messwert als ein Identifikator für die jeweilige Messung herangezogen werden kann. Dies erfordert, dass der Wertebereich, also die Messgenauigkeit, entsprechend hoch ist. Dies gewährleistet, dass mit großer Wahrscheinlichkeit ein Messwert nicht zweimal vorliegt. Der Messbereich bzw. die Messgenauigkeit wird also derart gewählt, dass selbst bei mehreren 100 Messungen, ein Messwert typischerweise nicht einem anderen entspricht. Somit ist das Merkmal "im Wesentlichen" optional und kann gestrichen werden, wobei dieses Merkmal lediglich verdeutlicht, dass typischerweise eine Eindeutigkeit vorliegt. Die Wahrscheinlichkeit, dass zwei Messwerte gleich sind, also kollidieren, ist derart gering, dass ein Messwert stets als ein Identifikator für eine Messung genutzt werden kann.

Eine Einzigartigkeit bzw. Eindeutigkeit entsteht durch die Kombination eines Messwertes beispielsweise durch:

- Zeitpunkt der Messung;

- Messwert; und/ oder

- benutzte Waage (ID).

Diese drei Werte sind gemäß eines Aspekts der vorliegenden Erfindung in jedem Datensatz einer Messung atomar. Zusätzliche Werte sind noch vorhanden, sind aber nicht nötig um jede Messung eindeutig zu identifizieren.

Gemäß am weiteren Aspekt der vorliegenden Erfindung wird eine Messgenauigkeit in Abhängigkeit der Anzahl der Messungen eingestellt. Dies hat den Vorteil, dass bei vielen Messungen auch die Messgenauigkeit derart erhöht werden kann, dass stets gewährleistet ist, dass ein Messergebnis nur einmal vorliegt. Werden beispielsweise Rohstoffe in Gramm gemessen, so kann die Anzahl der erfassten Nachkommastellen entsprechend angepasst werden. Während bei einer Messung der Messwert stets nur einmal vorkommt, wird mittels der Messgenauigkeit eingestellt, dass bei einer Mehrzahl von Messungen typischerweise stets einzige Messwerte entstehen. Werden beispielsweise 100 Messungen durchgeführt, so kann eine Messgenauigkeit von vier Nachkommastellen möglich sein. Dies ist lediglich beispielhaft und nicht einschränkend zu verstehen. Darüber hinaus kann eine Wahrscheinlichkeit eingestellt werden, die angibt, mit welcher Höchstwahrscheinlichkeit Messwerte kollidieren. So kann angegeben werden, dass lediglich statistisch gesehen ein Prozent der Messwerte kollidieren. Jede Messgenauigkeit kann generell benutzt werden, beliebig fein und beliebig groß. Das System ist mit jeder Messgenauigkeit kompatibel.

Gemäß einem weiteren Aspekt der vorliegenden Erfindung definiert der tolerierte Abweichungswert eine obere und/ oder eine unabhängig davon untere Abweichung. Dies hat den Vorteil, dass absolute oder relative Toleranzbereiche definiert werden können. Hier muss der Toleranzbereich nicht in beide Richtungen gleich sein, sondern kann unterschiedlich angepasst werden. So ist es möglich, dass der obere Toleranzwert bei einem Prozent liegt und der untere Toleranzwert liegt lediglich bei einem halben Prozent. Dies ermöglicht es, dass fehlende Rohstoffe kritischer eingeschätzt werden als eine Überlieferung.

Gemäß einem weiteren Aspekt der vorliegenden Erfindung wird die Waage in der Überwachungskomponente virtualisiert. Dies hat den Vorteil, dass die Waage virtuell nachgebildet werden kann und ein entsprechender Treiber Anwendung findet. Somit kann also die Funktionalität der Waage virtuell beliebig angepasst werden, während die physische Waage lediglich einen Messwert über die Datenschnittstelle liefert. Dies ermöglicht es also, dass eine beliebige Waage virtuell mit einer beliebigen Funktionalität gemäß einem Treiber ausgestattet wird.

Gemäß einem weiteren Aspekt der vorliegenden Erfindung beschreibt die Wägegutbezeichnung einen Rohstoff oder eine Verpackung. Dies hat den Vorteil, dass beschreibende Angaben erzeugt werden und somit ein Bearbeiter bzw. ein bearbeitendes System sofort erkennen kann, was nunmehr gewogen wurde.

Gemäß einem weiteren Aspekt der vorliegenden Erfindung werden mehrere Waagen betrieben, welche kommunikationstechnisch mit der Überwachungskomponente verbunden sind. Dies hat den Vorteil, dass das Verfahren derart iterativ ausgeführt werden kann, dass für jede Waage eine Konfiguration gefunden wird. Somit wird also ein paralleler Betrieb möglich und die unterschiedlichen Waagen liefern jeweils das gewünschte Messergebnis mit Bezeichnung.

Gemäß weiteren Aspekt der vorliegenden Erfindung wird die Wägegutbezeichnung in Abhängigkeit mindestens einer Eigenschaft der Waage gewählt. Dies hat den Vorteil, dass bei Überlappungen im Wertebereich auch eine Bezeichnung gewählt werden kann, die von der Waage vorgegeben ist. Gibt es eine Überlappung, so kann beispielsweise angegeben werden, dass von einer bestimmten Waage aus nur Rohstoffe gemessen werden. Von einer anderen Waage aus werden nur Verpackungen gemessen. Somit ergibt sich also die Bezeichnung aus der Identität der Waage. Hierbei handelt es sich allerdings um einen Ausnahmezustand.

Gemäß einem weiteren Aspekt der vorliegenden Erfindung bekommt genau eine Waage einen einzigen virtuellen Ordner zugewiesen, welcher ausschließlich entsprechende Messwerte der einen Waage abspeichert. Dies hat den Vorteil, dass Messungen in genau einem Ordner abgespeichert werden und somit werden nicht mehrere Messergebnisse in einem Ordner vermischt. Der eine Ordner dient also genau der einen Waage und somit kann genau dokumentiert werden, was diese eine Waage misst. Zusätzlich wird gemäß eines Aspekts der vorliegenden Erfindung alles in der Datenbank der Überwachungskomponente abgespeichert. Zusätzlich wird gemäß eines Aspekts der vorliegenden Erfindung der angesprochene Ordner mit den Rohdaten nochmal archiviert/dupliziert.

Gemäß einem weiteren Aspekt der vorliegenden Erfindung werden mitsamt des Messergebnisses ein Zeitstempel, eine Benutzeridentifikation, eine Messidentifikation, eine Netzwerkadresse der Waage und/ oder weitere Prozessdaten abgespeichert. Dies hat den Vorteil, dass für jede Messung ein Zeitstempel mit abgespeichert werden kann und zudem kann abgespeichert werden, welche Person die Waage bedient hat. Darüber hinaus kann eine Waage netzwerktechnisch mittels einer Adresse angesprochen werden und somit kann anhand der Adresse darauf zurückgeschlossen werden, welche Waage das Messergebnis geliefert hat.

Gemäß einem weiteren Aspekt der vorliegenden Erfindung wird die Waage ausschließlich zur Erzeugung von Messergebnissen eingerichtet und datentechnisch ausgelesen. Dies hat den Vorteil, dass eine herkömmliche Waage verwendet werden kann, welche keine Funktionalität außer dem Messen bereitstellen muss. Die Waage muss also nur messen und kann ausgelesen werden. Dies verhindert, dass aufwändige und teure Waagen Verwendung finden müssen.

Gemäß einem weiteren Aspekt der vorliegenden Erfindung wird eine Fehlermeldung ausgegeben, falls ein Zuordnen des erzeugten tatsächlichen Messergebnisses zu der Wägegutbezeichnung nicht möglich ist. Dies hat den Vorteil, dass Fehler erkannt werden können und somit kann erkannt werden, dass der Toleranzbereich überschritten wurde. Die Fehlermeldung kann darin bestehen, dass die entsprechende Charge verworfen wird oder aber ein Mitarbeiter bzw. zwei Mitarbeiter selbst eine Entscheidung treffen müssen.

Die Aufgabe wird auch gelöst durch eine Systemanordnung zur automatisierten Absicherung und Dokumentation eines Verarbeitungsprozesses von Rohstoffen zur Arzneimittelherstellung, aufweisend eine Datenschnittstelle eingerichtet zum Spezifizieren von mindestens zwei Messkonfigurationen für eine Waage, wobei jede Messkonfiguration eine Wägegutbezeichnung und ein Soll-Messergebnis mitsamt einem tolerierten Abweichungswert definiert; mindestens eine Waage eingerichtet zur Erzeugung eines tatsächlichen Messergebnisses und zum datentechnischen Abspeichern des Messergebnisses in einer der Waage entfernt angeordneten Überwachungskomponente; die Überwachungskomponente eingerichtet zum Zuordnen des erzeugten tatsächlichen Messergebnisses zu der Wägegutbezeichnung in Abhängigkeit eines Vergleichens des tatsächlichen Messergebnisses und des Soll-Messergebnisses mitsamt des Abweichungswerts Überwachungskomponente; und einen Datenspeicher eingerichtet zum datentechnischen Abspeichern des Messergebnisses mitsamt der Wägegutbezeichnung zur Dokumentation eines arzneimitteltechnischen Verarbeitungsprozesses in der entfernt angeordneten Überwachungskomponente.

Die Waagen können gegebenenfalls auch virtuell bzw. virtualisiert bereitgestellt werden und es kann lediglich das Ergebnis abgegriffen werden.

Die Aufgabe wird auch gelöst durch ein Computerprogrammprodukt mit Steuerbefehlen, welche das vorgeschlagene Verfahren implementieren beziehungsweise die vorgeschlagene Systemanordnung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:

Figur 1: ein schematisches Blockschaltbild der vorgeschlagenen Lagerstruktur gemäß einem Aspekt der vorliegenden Erfindung;

Figur 2: ein vereinfachtes Schaubild zum Ablegen der Daten gemäß einem weiteren Aspekt der vorliegenden Erfindung;

Figur 3: ein Blockschaltbild der Architektur mit der API und dem Frontend gemäß einem weiteren Aspekt der vorliegenden Erfindung; und

Figur 4: ein Ablaufdiagramm eines Verfahrens zur automatisierten Absicherung und Dokumentation eines Verarbeitungsprozesses von Rohstoffen zur Arzneimittelherstellung gemäß einem weiteren Aspekt der vorliegenden Erfindung.

Im Folgenden werden beispielhafte Strukturen und Abläufe definiert, welche bestimmte Szenarien und Anwendungen der vorliegenden Erfindung veranschaulichen. Diese sind nicht einschränkend sondern lediglich beispielhaft zu verstehen. Insbesondere können einzelne Aspekte miteinander kombiniert werden.

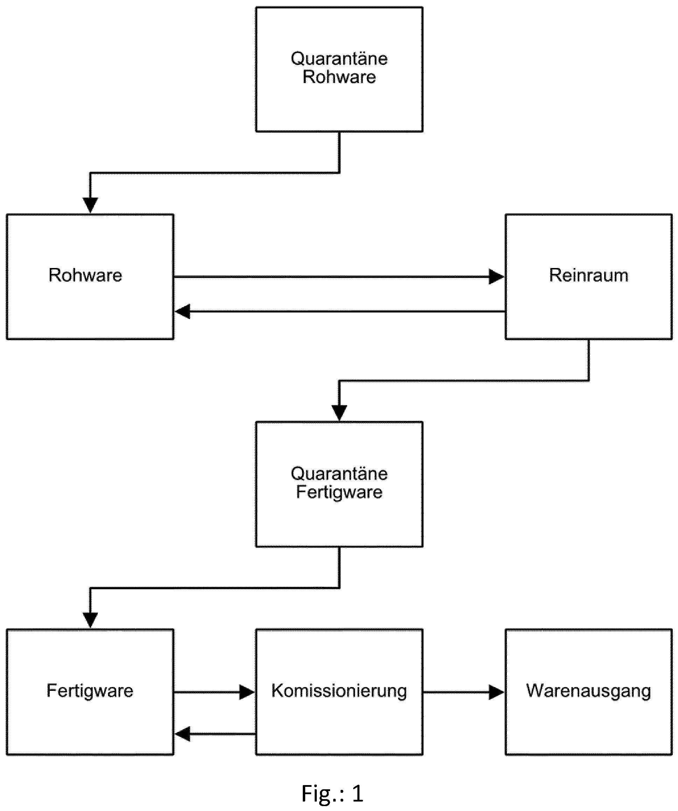

Figur 1 zeigt ein schematisches Blockschaltbild der vorgeschlagenen Lagerstruktur zur beispielhaften Verwendung in der vorgeschlagenen Erfindung. Zunächst soll der Lieferant auf das Gelände fahren und sich bei der Wache anmelden. Der Lieferant fährt zum Wareneingang und ein Mitarbeiter nimmt die Ware entgegen und prüft diese auf Sichtmängel. Die Ware wird palettenweise in Beuteln geliefert. Nun wird jeder einzelne Beutel in das ERP eingebucht. Zum Einbuchen wird ein Handheld-Gerät mit Touchdisplay und Barcodescanner verwendet. Dabei sind lediglich gemäß eines Aspekts der vorliegenden Erfindung folgende Schritte nötig.

Es werden erst die Metadaten der gelieferten Charge eingetragen, dazu gehören Lieferant, Lieferantenchargennummer, Datum und Verfallsdatum. Diese werden im Einbuchvorgang gespeichert, sodass man diese nicht bei jedem Beutel erneut eingeben muss. Als nächstes muss das Gewicht erfasst werden, da wir zu jederzeit wissen müssen, um wie viel Cannabis es sich handelt. Dazu wird der Beutel auf eine Waage gelegt. Dieses Gewicht muss lediglich gemäß eines Aspekts der vorliegenden Erfindung gespeichert und notiert werden. Im GMP-Umfeld muss bei einem Übertrag von GMP-relevanten Daten eine zusätzliche Person den Übertrag überwachen und Bestätigen (Vier-Augen-Prinzip). Alternativ kann man auf das Vier-Augen-Prinzip verzichten wenn der Vorgang durch ein validiertes Computersystem übernommen wird. Deshalb wird das gewogene Gewicht durch ein Modul in der eigenentwickelten Bilanzierungssoftware abgegriffen und auf einem Handheld-Gerät neben der Waage einmal in Klartext und Barcode angezeigt. Der Handscanner kann den Barcode jetzt abscannen und das Gewicht wird übernommen und kann nun im ERP-System in das Lager "Quarantäne Rohware" eingebucht werden.

GMP steht allgemein für "Good Manufacturing Practice". Hierunter versteht man Richtlinien zur Qualitätssicherung der Produktionsabläufe und -umgebung in der Produktion von Arzneimitteln. ERP steht hierbei für Enterprise-Resource-Planning. BTM steht allgemein für Betäubungsmittel.

Beim Einbuchen im ERP-System entsteht ein Datensatz mit allen Informationen über die eingebuchte Rohware. In der Aktion des Einbuchens wird ein Drucker angesprochen, der ein Etikett druckt, das essentielle Informationen wie Gewicht, Chargennummern, Verfallsdatum etc. enthält, sowie einen Barcode mit der eindeutigen Identifikationsnummer des eingebuchten Beutels. Das ausgedruckte Etikett wird dann auf den Beutel geklebt und ist bereit in das physische Lager transportiert zu werden.

Chargenfreigabe

Jeder Beutel Rohware, der in das Lager Quarantäne Rohware eingelagert wird, wird zunächst gesperrt. Bevor diese verarbeitet werden können, muss die QP stichprobenartig die Charge prüfen und ggf. freigegeben. Um eine Charge freizugeben oder zu sperren, wird ein Beutel aus der entsprechenden Charge gewählt und der Barcode auf dem aufgeklebten Etikett mit dem Handscanner gescannt - dadurch erhält man alle Informationen zu diesem Beutel und der Charge, auch die Möglichkeit diesen zu sperren oder freizugeben. Im Zuge dieser Aktion wird der Status alle Beutel die zu dieser Charge gehören ebenfalls auf "Gesperrt" oder "Freigegeben" gesetzt.

Diese Funktion ist notwendig, da sobald ein Mangel bei einem Beutel auftritt, die ganze Charge nicht mehr verwendet werden darf. Dadurch dass man nur den Beutel sperren muss, bei dem Mängel festgestellt wurden, müssen nicht alle zugehörigen Beutel bearbeitet werden, da das System diese Aufgabe übernimmt.

Lagerstruktur

Jedes Produkt, egal ob Rohware oder Fertigware muss bevor es weiterverarbeitet werden darf, von der QP ("Qualified Person" bzw. berechtigte Person) freigegeben werden. Um die vollständige Kontrolle über Lagerbewegungen und Freigaben zu haben, wurde eine Lagerstruktur im ERP-System definiert, die nur bestimmte Lagerbewegungen vorgibt, wie dies in Figur 1 gezeigt ist. Die Pfeile geben die Richtung an in welches Lager Ware gelagert werden darf. Jedes Rechteck in Figur 1 beschreibt ein Lager im ERP-System.

Umlagerung von Rohware und Fertigware

Rohware und Fertigware werden im Folgenden als Ware zusammengefasst. Ware wird lediglich gemäß eines Aspekts der vorliegenden Erfindung immer angefordert und wird dann dementsprechend Umgelagert, sofern folgende Kriterien erfüllt sind:

1. Die Ware ist freigegeben; und

2. Die Lagerrichtung ist konform mit dem Warenfluss der gemäß der Lagerstruktur definiert ist.

Zum Umlagern werden die entsprechenden Beutel abgescannt und das neue Lager ausgewählt. Dabei gibt es nur die Option gültige Lager auszuwählen. Weiterhin kann die Umbuchung nicht ausgeführt werden, wenn die Ware nicht freigegeben ist.

Produktion im Reinraum

Der Leiter der Herstellung fordert Rohware aus dem Lager an. Diese wird dann in den Reinraum gebucht und transportiert. Nach bestandener Prüfung wird die Rohware im Reinraum angenommen. Für die Produktion von Fertigwaren werden Dosen und Rohware benötigt. Über die gesamte Produktion muss eine Betäubungsmittelbilanz (BTM-Bilanz) gemacht werden, damit bewiesen werden kann, dass keine Rohware im Prozess verloren gegangen ist. Dafür wird zunächst ein verschlossener Beutel gewogen. Dieser wird anschließend geöffnet und in eine große Wanne gefüllt.
Nun wird der Rohstoff aus dieser Wanne in die Dosen gefüllt. Der eigentliche Abfüllprozess besteht beispielsweise aus folgenden Schritten:

1. Leere Dose auf die Waage stellen;

2. Waage tarieren;

3. Rohstoff einfüllen;

4. Print-Taste drücken (initiiert das Speichern des Gewichts);

5. "Transfer Ftp" drücken (Das gespeicherte Gewicht wird an den FTP-Server übertragen);

6. Optimieren der Wägung über ein iPad (damit weniger menschliche Fehler entstehen. Optimieren ist eine Funktion der eigen entwickelten Bilanzierungssoftware - siehe Kapitel von 60);

7. Dose versiegeln;

8. Dose mittels Kappenschrauber und konstantem Drehmoment verschließen; und/ oder

9. Dose mit Etikett bekleben.

In den Schritten 3 bis 5 wird das Gewicht des abgefüllten Rohstoffes erfasst. Anschließend muss nun die Verpackung des zuvor geleerten Rohstoffbeutels gewogen werden. Nach diesem Schritt ist die BTM-Bilanz vollständig erfasst. Zum Schluss wird eine Umwandlung des Rohstoffs in Fertigware im ERP-System veranlasst. Dazu wird ein Produktionsauftrag erstellt. Durch die Angabe der Rohstoffmenge errechnet das ERP-System die voraussichtliche Menge an Fertigware. Diese kann bestätigt oder angepasst werden. Somit befindet sich die produzierte Menge nun im Lager "Quarantäne Fertigware".

Bilanzierungssoftware

Die Bilanzierungssoftware übernimmt die Dokumentation und Verarbeitung von Wägedatensätzen, also Datensätze, die jeweils das Wiegen beschreiben. Sie besteht aus mehreren Komponenten, die unabhängig voneinander entworfen wurden.

Funktion

Hauptaufgabe ist es eine robuste und zuverlässige Bilanz im Reinraum zu erstellen. Diese ist essentiell, um BTM-konform zu arbeiten. Wichtig dabei ist, dass zu keinem Zeitpunkt Daten verloren gehen können und die Integrität immer gewährleistet ist.

Architektur

Die Architektur wurde so entworfen, dass man sehr flexibel bei der Wahl etlicher Komponenten sein kann, darunter Datenbank, Frontend und Hardware wie zum Beispiel Waagen. Die Bilanzierungssoftware besteht beispielsweise aus vier Softwarekomponenten und Hardware die als Input Device, also Eingabegerät, dienen kann (Waagen). Die Waagen sind in der Lage, die gewogenen Daten zu erfassen und als Text-Datei auf einem FTP-Server abzulegen.

Dabei handelt es sich lediglich gemäß eines Aspekts der vorliegenden Erfindung um eine Funktion der Waage und nicht der Bilanzierungssoftware. An diesem Punkt knüpft dann die erste Komponente an.

Watchdog

Der Watchdog überwacht laufend den FTP-Server und wartet bis neue Dateien von der Waage erstellt werden. Sobald eine Datei erstellt wurde, wird diese vom Watchdog verarbeitet. Zunächst findet eine Prüfung des Formats der Datei statt, so dass sichergestellt werden kann, dass es sich um ein gültiges und akzeptierendes Dateiformat handelt. Anschließend werden dann die relevanten Daten extrahiert und in eine dynamische anpassbare Datenstruktur transformiert. Von der originalen Eingabedatei wird eine Kopie in einem Archiv erzeugt und die Eingabedatei wird aus dem Eingabeverzeichnis entfernt. Die extrahierten Daten werden an das nächste Modul weitergegeben.

Datenbank

Die extrahierten Daten werden in eine Datenbank gespeichert und mit zusätzlichen Informationen angereichert. Bei der Datenbank handelt es sich beispielsweise um eine NoSql-Datenbank, die es erlaubt eingefügte Datensätze zu snapshotten, also eine virtuelles Bildschirmabbild zu erstellen, und zu dokumentieren, die dadurch robust und zusammenhängend sind.

API

Um Zugriff auf die Datenbank zu bekommen und zu gewährleisten, dass dabei keine Operationen ausgeführt werden können, die zur Manipulation der originalen Daten führen könnten, wurde eine REST-API entwickelt bei der sich mittels Username und Password authentifiziert werden muss. Außer bei der initialen Erstellung der Datensätze erfolgt jeder Zugriff auf die Datenbank über diese API mit den ausgewählten Funktionen.

Frontend

Wenn die Daten eingesehen werden sollen, gibt es ein Frontend, welches sich über die API die Daten holt und aufbereitet. Dabei werden diese lokal gecached, also zwischengespeichert, und entsprechende Filter angeboten, um an die benötigten Informationen zu gelangen. Das Frontend wurde mit React erstellt und ist Browser basiert, so dass eine plattformunabhängige Lösung gegeben ist.

Anreicherung der Gewichtsdaten

Die Waagen sollen unabhängig von der Bilanzierung sein und sollen lediglich das gewogene Gewicht speichern. Um jedoch eine Bilanzierung zu erreichen, müssen zusätzliche Informationen an den rohen Datensatz hinzugefügt werden. Jede Waage hat lediglich gemäß eines Aspekts der vorliegenden Erfindung ein eigenes Verzeichnis auf dem FTP-Server, in das es ihre Daten schreibt. Es wird in der Datenbank ein abstraktes Waagenmodell angelegt, das aus einem Namen und einem Verzeichnis besteht. Somit kann eine Relation zwischen Verzeichnis und Waage hergestellt werden. Weiterhin wird ein Modus angelegt. Er spezifiziert welche Objekte gewogen werden, welchen Soll-Wert dieses Objekt hat und um welchen Wert davon abgewichen werden darf. Jedes abstrakte Waagenobjekt bekommt einen dieser Modi zugeordnet, somit weiß die Bilanzierungssoftware welches Gewicht welchen Typ hat (z.B. Rohstoff oder Verpackung).

Welche Waage in welchen Modus geschaltet wird, dürfen Benutzer mit entsprechenden Rechten über das Frontend einstellen (z.B. Leiter der Herstellung). Dadurch entsteht eine umfangreiche Sammlung von Daten, aus denen sehr viel Information gewonnen werden kann, die Waagen müssen nichts können außer ihr gewogenes Gewicht in eine Datei zu schreiben.

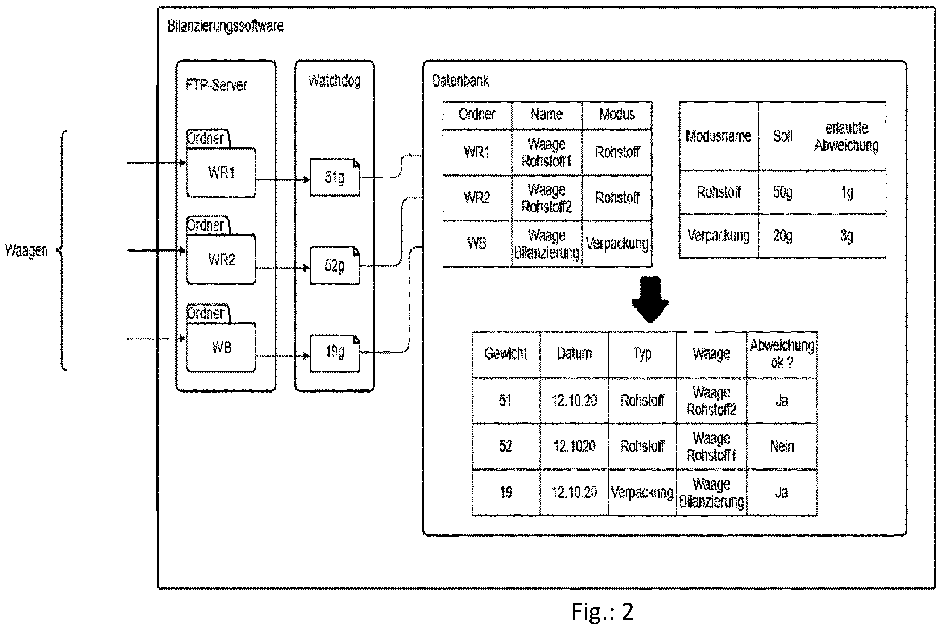

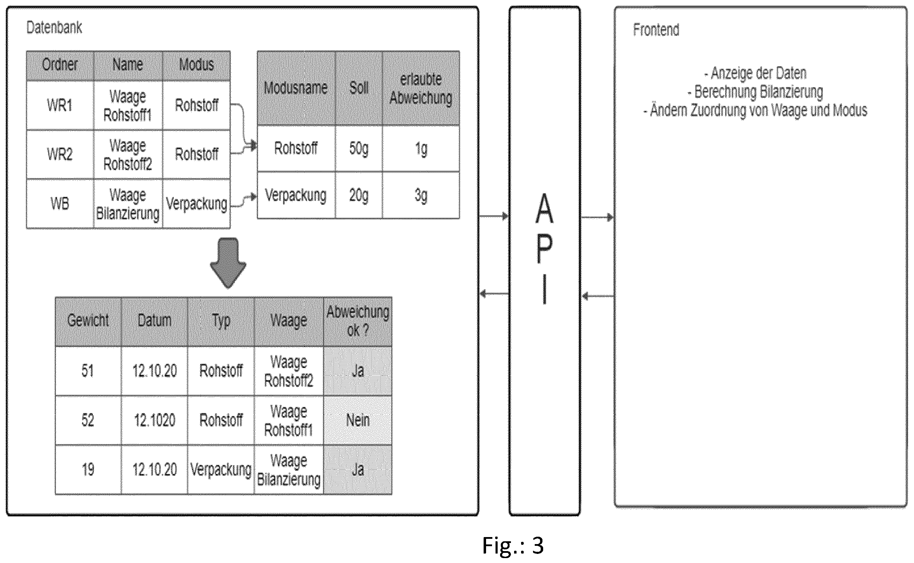

Figur 2 zeigt ein vereinfachtes Schaubild zum Ablegen der Daten. Zur Vollständigkeit folgt noch eine weitere Veranschaulichung der vorgeschlagenen Architektur mit der API und dem Frontend in Figur 3.

Die vorliegende Figur 2 zeigt auf der linken Seite mehrere Waagen, welche ein Messergebnis erzeugen und dies an einen Server übermitteln. Ein Überwachungsdienst, bzw. Watchdog, erkennt die entsprechenden Dokumente, die ein Messergebnis vorsehen. Hierbei kann es sich um 51 g bzw. 52 g für einen Rohstoff handeln oder es wird eine Messkonfiguration von 19 g erkannt, was einer Verpackung entspricht. Somit ist ein solches Soll-Ergebnis 20 g, mit einer Toleranz von 3 g. Da 19 g innerhalb dieses Toleranzbereichs liegt, wird die Bezeichnung "Verpackung" gewesen. Ein Problem gibt es dann, falls eine Charge 52 g wiegt, der Toleranzbereich jedoch bei höchstens 51 g liegt. Dies entspricht der zweiten Messung von oben. Hier wird eine Fehlermeldung ausgegeben.

Berechnung der Bilanz

Es kann zu jeder Zeit die Bilanz über einen definierbaren Zeitraum eingesehen werden. Diese Funktion ist auf dem Frontend einzusehen. Dieses fragt über die API die angereicherten Gewichtsdaten ab und berechnet die Bilanz nach folgender Formel:

$$\text{Summe Rohstoffbeutel - Summe Verpackung - Summe Rohstoff} = 0$$

Es soll sich also das Gesamtgewicht der Rohstoffbeutel ausschließlich aus der Verpackung und dem Rohstoff gebildet werden und hier soll auch kein Gewichtsverlust entstehen. Bei einem Ergebnis ungleich 0 wird ein Fehler angezeigt. Weiterhin gibt es für statistische bzw. Optimierungszwecke eine Ansicht über die eingehaltenen Abweichungen. Die Auswahl des Zeitraums für die Bilanzierung wird über die Filter im Frontend geregelt.

Benutzerverwaltung

Der Zugang zur Bilanzierungssoftware ist nur für Personen mit einem von der IT angelegten Account möglich. Durch ein Rechtesystem haben nicht alle Benutzer die Möglichkeiten bestimmte Funktionen zu benutzen oder einzusehen. Jeder Mitarbeiter der eine Waage bedienen möchte soll sich vorher bei der Bilanzierungssoftware anmelden und dort die Waage auswählen, die er bedienen wird. Dadurch lässt sich das abstrakte Waagenmodell mit dem Benutzer koppeln und dokumentiert zusätzlich zu der Wägung welcher Mitarbeiter diese getätigt hat. Dadurch lassen sich bei Problemen, Verantwortlichkeiten leichter identifizieren.

Live-View

Es wurde ein Modul für die Bilanzierungssoftware entwickelt, dass die zu Grunde liegenden Daten und die Einbindung von Waagen über Plug-and-Play ermöglicht, um weitere Prozesse zu optimieren. Beim Übertrag von BTM-Daten werden immer zwei Personen benötigt, um zu verifizieren, dass beim Übertrag kein Fehler entstanden ist. Das kostet Personal und ist trotzdem fehleranfällig. Das Modul Live-View zeigt immer das zuletzt gewogene Gewicht jeder Waage an. Einmal in Klartext und einmal als Barcode der von dem Handscanner(z.B. beim Wareneingang) benutzt werden kann. Der Watchdog legt nicht nur den Datensatz in der Datenbank an, sondern erstellt noch einen weiteren Datensatz in einer anderen Tabelle, damit dieses Modul unabhängig von dem eigentlichen Datensatz benutzt wird. Das Frontend fragt alle 1,5 Sekunden die Datenbank ab, ob es einen neuen Wert gibt, damit auf dem Anzeigemedium (z.B. Tablet) ein pseudo-live Wert der letzten Wägung angezeigt wird.

Da es nur pseudo-live ist und es ein Zeitfenster von 1,5 Sekunden gibt zwischen dem Status "Es wurde gewogen" und "möchte scannen", kann es dazu kommen, dass der alte und noch nicht aktualisierte Barcode gescannt wird. Deshalb wurde ein Button eingefügt, der den Barcode löscht nachdem man ihn erfolgreich abgescannt hat. Dadurch ist der alte Barcode schon entfernt worden, bevor der neue erstellt wird und der Mitarbeiter kann den neuen Barcode ohne Bedenken abscannen.

Unabhängigkeit und Ausfallsicherheit

Um in der Produktion und der Wahl der Waagen flexibel und ausfallsicher zu sein, ist die Bilanzierungssoftware so aufgebaut, dass diese unabhängig von der eigentlichen Waage ist und die Waage unabhängig von der IT-Infrastruktur ist (Strom ausgenommen). Und das System sich sofort wieder auf den aktuellen Stand bringt, wenn alle Komponenten wieder aktiv sind.

Die Waagen haben einen internen Speicher auf dem jede Wägung gespeichert wird. So ein Datensatz beinhaltet folgende Informationen:

1. Datum bzw. Zeitstempel;

2. Gewicht in Gramm g; und/ oder

3. ID der Wägung, die von der Waage vergeben wird.

Da die Waage es in ihren internen Speicher schreibt, ist es unabhängig von dem Netzwerk und jeder anderen IT-Infrastruktur. Damit die Waage ihre Daten jedoch an das Netzwerk teilt, gibt es an der Waage den Knopf "Trans. FTP", das bewirkt dass die Daten aus dem internen Speicher der Waage an einen FTP-Server übertragen werden. War dieser Vorgang erfolgreich wird der interne Speicher der Waage geleert, war es nicht erfolgreich (z.B. durch Ausfall des Netzwerks), bleibt der interne Speicher erhalten. Das Watchdog-Modul der Bilanzierungssoftware überwacht permanent den FTP-Server. Kommt eine Datei dort an wird diese entsprechend verarbeitet (wie in Kapitel 60 beschrieben). Sollte der Watchdog zwischenzeitlich ausfallen, können die Daten weiterhin von der Waage auf den FTP-Server geschrieben werden. Sobald der Watchdog wieder gestartet wird, werden alle Dateien die nicht bearbeitet wurden, gleichzeitig bearbeitet und bringt die Datenbank sofort wieder auf den aktuellen Stand. Während des Ausfalls des Watchdogs ist die Bilanzierung nicht aktuell. Da die Bilanz erst am Ende eines Arbeitstages/ Charge gemacht wird, kann die Produktion weiterlaufen. Wenn eine Waage während der Produktion ausfällt, kann eine andere Waage die Aufgabe übernehmen. Die Waagen sollen unabhängig sein und wissen nicht welchen Teil der Bilanz sie wiegen. Die Zuordnung welches Gewicht als welcher Teil der Bilanz betrachtet wird, macht die Bilanzierungssoftware über die Zuordnung des Waagenmodus.

Beispiel: Waage1 wird dafür benutzt volle und verschlossene Rohstoffbeutel zu wiegen/ bilanzieren.

Waage2 wird dafür benutzt den Rohstoff, der in die Dosen abgefüllt wird, zu wiegen/ bilanzieren. In der Bilanzierungssoftware wurde demnach konfiguriert, dass Waage1 im Modus "Rohstoffbeutel" läuft und Waage2 im Modus "Rohstoff". Fällt nun Waage1 aus, kann Waage2 über die Bilanzierungssoftware in den Modus "Rohstoffbeutel" geschaltet werden. Ein neuer Rohstoffbeutel wird gewogen und geöffnet. Danach kann Waage2 wieder zurück geschaltet werden in den Modus "Rohstoff", um nun weiter die Dosen abzufüllen. Die Konfiguration kann über eines der Tablets gemacht werden, wenn der Mitarbeiter die entsprechenden Rechte hat. Somit wäre die gesamte Produktion immer noch produktionsfähig, selbst wenn 80% aller Waagen am gesamten Standort gleichzeitig ausfallen würden.

Server und Backupstrategie

Alle Server können virtualisiert werden. Das bedeutet, dass Software nicht direkt auf einer Hardware Maschine läuft, sondern dazwischen eine Virtualisierungsebene geschaltet ist. Diese gewährleistet eine effiziente Zuordnung der Systemressourcen. So läuft beispielsweise die Datenbank auf einer eigenen VM (Virtuellen Maschine) und der FTP Server auf einer anderen Virtuellen Maschine. Dies hat den Vorteil das im Falle eines Ausfalls schnell und ohne Datenverlust ein Backup wiederhergestellt werden kann. Aktuell wird täglich um 22 Uhr ein Backup von allen VMs erstellt. Diese sind am ersten Tag der Woche volle Backups und an Folgetagen nur noch inkrementell, es werden also nur noch die Differenzen zum vollen Backup gesichert. Dies spart Speicherplatz und erhöht die Geschwindigkeit des Backups. Gespeichert werden die Backups 30 Tage.

Die Häufigkeit und Aufbewahrungsdauer der Backups können beliebig erhöht werden. Durch die Architektur der VMs ist es sogar möglich parallel zum Live Betrieb ein Backup einzuspielen. Dies ist beispielsweise denkbar, wenn die Vermutung eines Datenverlusts vorliegt aber aktuell produziert wird. Dann wird eine zweite VM aus dem Backup erstellt und es können die alten Daten geprüft werden.

Handscanner

Die Handscanner haben Zugriff auf eine Website, die auf dem ERP Server gehostet wird. Über diese Website stehen nach einer Authentifizierung folgende Funktionen zur Verfügung:

1. Einlagern;

2. Umlagern; und/ oder

3. Status setzen.

Bei mobilen Geräten ist es best-practice eine asynchrone Architektur zu benutzen, um eine flüssige User Experience zu gewährleisten. Dies bedeutet das schreibende Transaktionen zunächst zwischengespeichert werden und im Hintergrund übertragen werden, dies hat den Vorteil, dass der User bereits die nächsten Aktionen durchführen kann. Damit die Handscanner eine asynchrone Arbeitsweise gewährleisten können, werden alle Transaktionen die über den Handscanner ausgeführt zunächst in eine Zwischendatenbank geschrieben. Von dieser werden sie periodisch in die Datenbank des ERP-Systems übertragen.

Einlagern

Zum Einlagern von Rohware kann zunächst der Lieferant der Ware ausgewählt oder abgescannt werden (von einem Stammdatenblatt). Danach wird der Artikel ausgewählt. Anschließend wird die Lieferantenchargennummer gescannt. Nun wird das Verfallsdatum des Produkts angegeben. Abschließend wird wie beschrieben das Gewicht des Beutels gescannt. Bevor der Datensatz endgültig gespeichert wird muss der Mitarbeiter auf dem Handscanner die Transaktion mit seinem Usernamen bestätigen. Nachdem der Datensatz gespeichert wurde, wird vom ERP-System ein Barcode generiert dieser wird automatisch auf einem im System hinterlegten Barcodedrucker ausgedruckt. Er enthält unter anderem folgende Informationen: Artikelnummer, Artikelbezeichnung, Lieferantenchargennummer und das Verfallsdatum.

Umlagern

Muss ein Artikel umgelagert werden wählt der Mitarbeiter im Hauptmenü den Unterpunkt "Umlagern" aus. Hier scannt er den Beutel ab und bekommt im Folgenden eine Auswahl an möglichen Lagern, in die das Produkt gebucht werden darf.

Status setzen

Muss eine verantwortliche Person den Status einer Charge setzen erfolgt dies über den Menüpunkt "Status setzen". Dies darf nur von einer QP ("Qualified Person") durchgeführt werden. Dies ist in der Rechteverwaltung hinterlegt. Um den Status zu setzen scannt eine QP den Barcode des Produktes der Charge, die sie ändern möchte ab und wählt im Folgenden den neuen Status der Charge aus. Bevor der Datensatz endgültig gespeichert wird, muss der Mitarbeiter auf dem Handscanner die Transaktion mit seinem Usernamen bestätigen.

Halbautomatische und vollautomatische Aussichten

Jede halb- oder auch vollautomatische Produktionsstraße wird eine Waage enthalten, geplant ist das dort zunächst OCS-Waagen benutzt werden. Diese können ihre Daten ebenfalls über das Netzwerk an einen Server senden. Da die Bilanzierungssoftware nur die Dateien benötigt und nicht an die eigentlichen Waagen gekoppelt ist, kann diese die Dateien ebenfalls auf die gleiche Art und Weise bearbeiten. Es muss lediglich das anfängliche parsen der Daten vom Watchdog angepasst werden, da jede Waage ein leicht geändertes Format hat. Das wird dem Watchdog hinzugefügt, so dass dieser auch die Dateien dieser Waage verarbeiten kann.

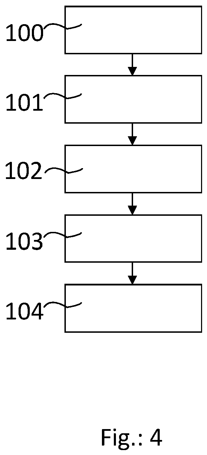

Figur 4 zeigt ein Verfahren zur automatisierten Absicherung und Dokumentation eines Verarbeitungsprozesses von Rohstoffen zur Arzneimittelherstellung, aufweisend ein Spezifizieren 100 von mindestens zwei Messkonfigurationen für eine Waage, wobei jede Messkonfiguration eine Wägegutbezeichnung und ein Soll-Messergebnis mitsamt einem tolerierten Abweichungswert definiert; ein Erzeugen 101 eines tatsächlichen Messergebnisses durch die Waage und datentechnisches Abspeichern des Messergebnisses in einer der Waage entfernt angeordneten Überwachungskomponente; ein Zuordnen 102 des erzeugten 101 tatsächlichen Messergebnisses zu der Wägegutbezeichnung in Abhängigkeit eines Vergleichens 103 des tatsächlichen Messergebnisses und des Soll-Messergebnisses mitsamt des Abweichungswerts in der Überwachungskomponente; und ein datentechnisches Abspeichern 104 des Messergebnisses mitsamt der Wägegutbezeichnung zur Dokumentation eines arzneimitteltechnischen Verarbeitungsprozesses in der entfernt angeordneten Überwachungskomponente.

Der Fachmann erkennt hierbei, dass die Schritte weitere Unterschritte aufweisen können und insbesondere, dass die Verfahrensschritte jeweils iterativ und/ oder in anderer Reihenfolge ausgeführt werden können. Besonders vorteilhaft ist es die Schritte in genau der beschriebenen Reihenfolge auszuführen.

Vorliegend nicht gezeigt ist ein Datenspeicher oder ein computerlesbares Medium mit einem Computerprogrammprodukt aufweisend Steuerbefehle, welche das vorgeschlagene Verfahren implementieren bzw. die vorgeschlagene Systemanordnung betreiben.

**Patentansprüche**

1. Verfahren zur automatisierten Absicherung und Dokumentation eines Verarbeitungsprozesses von Rohstoffen zur Arzneimittelherstellung, aufweisend:

   - ein Spezifizieren (100) von mindestens zwei Messkonfigurationen für eine Waage, wobei jede Messkonfiguration eine Wägegutbezeichnung und ein Soll-Messergebnis mitsamt einem tolerierten Abweichungswert definiert;
   - ein Erzeugen (101) eines tatsächlichen Messergebnisses durch die Waage und datentechnisches Abspeichern des Messergebnisses in einer der Waage entfernt angeordneten Überwachungskomponente;
   - ein Zuordnen (102) des erzeugten (101) tatsächlichen Messergebnisses zu der Wägegutbezeichnung in Abhängigkeit eines Vergleichens (103) des tatsächlichen Messergebnisses und des Soll-Messergebnisses mitsamt des Abweichungswerts in der Überwachungskomponente; und
- ein datentechnisches Abspeichern (104) des Messergebnisses mitsamt der Wägegutbezeichnung zur Dokumentation eines arzneimitteltechnischen Verarbeitungsprozesses in der entfernt angeordneten Überwachungskomponente.

2. Verfahren nach Anspruch 1, **dadurch gekennzeichnet, dass** jedes erzeugte (101) tatsächliche Messergebnis anhand dessen Messwerts im Wesentlichen eindeutig identifizierbar ist.

3. Verfahren nach Anspruch 1 oder 2, **dadurch gekennzeichnet, dass** eine Messgenauigkeit in Abhängigkeit der Anzahl der Messungen eingestellt wird.

4. Verfahren nach einem der vorhergehenden Ansprüche, **dadurch gekennzeichnet, dass** der tolerierte Abweichungswert eine obere und/ oder eine unabhängig davon untere Abweichung definiert.

5. Verfahren nach einem der vorhergehenden Ansprüche, **dadurch gekennzeichnet, dass** die Waage in der Überwachungskomponente virtualisiert wird.

6. Verfahren nach einem der vorhergehenden Ansprüche, **dadurch gekennzeichnet, dass** die Wägegutbezeichnung einen Rohstoff, Rohstoff im Rohstoffbeutel oder eine Verpackung beschreibt.

7. Verfahren nach einem der vorhergehenden Ansprüche, **dadurch gekennzeichnet, dass** mehrere Waagen betrieben werden, welche kommunikationstechnisch mit der Überwachungskomponente verbunden sind.

8. Verfahren nach einem der vorhergehenden Ansprüche, **dadurch gekennzeichnet, dass** die Wägegutbezeichnung in Abhängigkeit mindestens einer Eigenschaft der Waage gewählt wird.

9. Verfahren nach einem der vorhergehenden Ansprüche, **dadurch gekennzeichnet, dass** genau eine Waage einen einzigen virtuellen Ordner zugewiesen bekommt, welcher ausschließlich entsprechende Messwerte der einen Waage abspeichert.

10. Verfahren nach einem der vorhergehenden Ansprüche, **dadurch gekennzeichnet, dass** mitsamt des Messergebnisses ein Zeitstempel, eine Benutzeridentifikation, eine Messidentifikation, eine Netzwerkadresse der Waage und/ oder weitere Prozessdaten abgespeichert werden.

11. Verfahren nach einem der vorhergehenden Ansprüche, **dadurch gekennzeichnet, dass** die Waage ausschließlich zur Erzeugung (101) von Messergebnissen eingerichtet ist und datentechnisch ausgelesen wird.

12. Verfahren nach einem der vorhergehenden Ansprüche, **dadurch gekennzeichnet, dass** eine Fehlermeldung ausgegeben wird, falls ein Zuordnen (102) des erzeugten (101) tatsächlichen Messergebnisses zu der Wägegutbezeichnung nicht möglich ist.

13. Systemanordnung zur automatisierten Absicherung und Dokumentation eines Verarbeitungsprozesses von Rohstoffen zur Arzneimittelherstellung, aufweisend:

    - eine Datenschnittstelle eingerichtet zum Spezifizieren (100) von mindestens zwei Messkonfigurationen für eine Waage, wobei jede Messkonfiguration eine Wägegutbezeichnung und ein Soll-Messergebnis mitsamt einem tolerierten Abweichungswert definiert;
    - mindestens eine Waage eingerichtet zur Erzeugung (101) eines tatsächlichen Messergebnisses und zum datentechnischen Abspeichern des Messergebnisses in einer der Waage entfernt angeordneten Überwachungskomponente;
    - die Überwachungskomponente eingerichtet zum Zuordnen (102) des erzeugten (101) tatsächlichen Messergebnisses zu der Wägegutbezeichnung in Abhängigkeit eines Vergleichens (103) des tatsächlichen Messergebnisses und des Soll-Messergebnisses mitsamt des Abweichungswerts Überwachungskomponente; und
    - einen Datenspeicher eingerichtet zum datentechnischen Abspeichern (104) des Messergebnisses mitsamt der Wägegutbezeichnung zur Dokumentation eines arzneimitteltechnischen Verarbeitungsprozesses in der entfernt angeordneten Überwachungskomponente.

14. Computerprogrammprodukt, umfassend Befehle, die bei der Ausführung des Programms durch einen Computer diesen veranlassen, die Schritte des Verfahrens nach einem der Ansprüche 1 bis 12 auszuführen.

15. Computerlesbares Speichermedium, umfassend Befehle, die bei der Ausführung durch einen Computer diesen veranlassen, die Schritte des Verfahrens nach einem der Ansprüche 1 bis 12 auszuführen.

**Claims**

1. A method for automated safeguarding and documentation of a processing procedure of raw materials for pharmaceutical production, comprising:

   - specifying (100) at least two measurement configurations for a scale, each measurement configuration defining a weighing product designation and a target measurement result together with a tolerated deviation value;
   - generating (101) an actual measurement result by the scale and storing the measurement result in a monitoring component remote from the scale;
   - assigning (102) the generated (101) actual measurement result to the weight designation in response to comparing (103) the actual measurement result and the target measurement result including the deviation value in the monitoring component; and
   - a data storage (104) of the measurement result together with the weighing product designation for documenting a drug processing procedure in the remotely located monitoring component.

2. The method according to claim 1, **characterized in that** each generated (101) actual measurement result is substantially uniquely identifiable by its measurement value.

3. The method according to claim 1 or 2, **characterized in that** a measurement accuracy is set as a function of the number of measurements.

4. The method according to one of the preceding claims, **characterized in that** the tolerated deviation value defines an upper and/or an independently lower deviation.

5. The method according to any of the preceding claims, **characterized in that** the scale is virtualized in the monitoring component.

6. The method according to one of the preceding claims, **characterized in that** the weighing product designation describes a raw material, raw material in a raw material bag or a packaging.

7. The method according to one of the preceding claims, **characterized in that** several scales are operated which are connected to the monitoring component by means of communication technology.

8. The method according to any one of the preceding claims, **characterized in that** the weighing product designation is selected as a function of at least one property of the balance.

9. The method according to one of the preceding claims, **characterized in that** exactly one scale is assigned a single virtual folder which exclusively stores corresponding measured values of the one scale.

10. The method according to one of the preceding claims, **characterized in that** a time stamp, a user identification, a measurement identification, a network address of the scale and/or further process data are stored together with the measurement result.

11. The method according to one of the preceding claims, **characterized in that** the balance is set up exclusively for generating (101) measurement results and is read out in terms of data.

12. The method according to one of the preceding claims, **characterized in that** an error message is output if it is not possible to assign (102) the generated (101) actual measurement result to the weighing product designation.

13. A system arrangement for automated safeguarding and documentation of a processing procedure of raw materials for pharmaceutical production, comprising:

- a data interface set up for specifying (100) at least two measurement configurations for a scale, each measurement configuration defining a weighing product designation and a target measurement result together with a tolerated deviation value;
- at least one scale arranged for generating (101) an actual measurement result and for data storage of the measurement result in a monitoring component arranged remotely from the scale;
- the monitoring component is arranged to assign (102) the generated (101) actual measurement result to the weighing product designation in dependence on a comparison (103) of the actual measurement result and the target measurement result together with the deviation value monitoring component; and
- a data memory set up for the data storage (104) of the measurement result together with the weighing product designation for the documentation of a pharmaceutical processing procedure in the remotely arranged monitoring component.

14. A computer program product comprising instructions which, when the program is executed by a computer, cause the computer to perform the steps of the method of any one of claims 1 to 12.

15. A computer-readable storage medium comprising instructions which, when executed by a computer, cause the computer to perform the steps of the method of any one of claims 1 to 12.

## Revendications

1. Procédé pour la sécurisation et la documentation automatisées d'un processus de traitement de matières premières pour la fabrication de médicaments, comprenant :

    - une spécification (100) d'au moins deux configurations de mesure pour une balance, chaque configuration de mesure définissant une désignation du produit à peser et un résultat de mesure de consigne, avec une valeur d'écart tolérée ;
    - une génération (101) d'un résultat de mesure réel par la balance et une mémorisation informatique du résultat de mesure dans un composant de surveillance disposé à distance de la balance ;
    - une association (102) du résultat de mesure réel généré (101) à la désignation du produit à peser en fonction d'une comparaison (103) du résultat de mesure réel et du résultat de mesure de consigne, avec la valeur d'écart, dans le composant de surveillance ; et
    - une mémorisation informatique (104) du résultat de mesure avec la désignation du produit à peser pour la documentation d'un processus de traitement de la technique des médicaments dans le composant de surveillance disposé à distance.

2. Procédé selon la revendication 1, **caractérisé en ce que** chaque résultat de mesure réel généré (101) peut être identifié de manière essentiellement univoque à l'aide de sa valeur de mesure.

3. Procédé selon la revendication 1 ou 2, **caractérisé en ce qu'**une précision de mesure est réglée en fonction du nombre de mesures.

4. Procédé selon l'une des revendications précédentes, **caractérisé en ce que** la valeur d'écart tolérée définit un écart supérieur et/ou un écart inférieur indépendant de celui-ci.

5. Procédé selon l'une des revendications précédentes, **caractérisé en ce que** la balance est virtualisée dans le composant de surveillance.

6. Procédé selon l'une des revendications précédentes, **caractérisé en ce que** la désignation du produit à peser décrit une matière première, une matière première dans un sac de matière première ou un emballage.

7. Procédé selon l'une des revendications précédentes, **caractérisé en ce que** plusieurs balances sont utilisées, lesquelles sont reliées au composant de surveillance par une technique de communication.

8. Procédé selon l'une des revendications précédentes, **caractérisé en ce que** la désignation de produit à peser est choisie en fonction d'au moins une propriété de la balance.

9. Procédé selon l'une des revendications précédentes, **caractérisé en ce que** exactement une balance se voit attribuer un seul dossier virtuel qui mémorise exclusivement les valeurs de mesure correspondantes de ladite balance.

10. Procédé selon l'une des revendications précédentes, **caractérisé en ce qu'**un horodatage, une identification d'utilisateur, une identification de mesure, une adresse réseau de la balance et/ou d'autres données de processus sont mémorisés avec le résultat de mesure.

11. Procédé selon l'une des revendications précédentes, **caractérisé en ce que** la balance est exclusivement configurée pour générer (101) des résultats de mesure et est lue informatiquement.

12. Procédé selon l'une des revendications précédentes, **caractérisé en ce qu'**un message d'erreur est émis si aucune association (102) du résultat de mesure réel généré (101) à la désignation du produit à peser n'est possible.

13. Agencement de système pour la sécurisation et la documentation automatisées d'un processus de traitement de matières premières pour la fabrication de médicaments, présentant :

- une interface de données configurée pour spécifier (100) au moins deux configurations de mesure pour une balance, chaque configuration de mesure définissant une désignation du produit à peser et un résultat de mesure de consigne avec une valeur d'écart tolérée ;
- au moins une balance configurée pour générer (101) un résultat de mesure réel et pour mémoriser informatiquement le résultat de mesure dans un composant de surveillance disposé à distance de la balance ;
- le composant de surveillance configuré pour associer (102) le résultat de mesure réel généré (101) à la désignation du produit à peser en fonction d'une comparaison (103) du résultat de mesure réel et du résultat de mesure de consigne avec la valeur d'écart ; et
- une mémoire de données configurée pour mémoriser informatiquement (104) le résultat de mesure avec la désignation du produit à peser pour la documentation d'un processus de traitement de la technique des médicaments dans le composant de surveillance disposé à distance.

14. Produit programme d'ordinateur, comprenant des instructions qui, lors de l'exécution du programme par un ordinateur, amènent celui-ci à mettre en oeuvre les étapes du procédé selon l'une des revendications 1 à 12.

15. Support de stockage lisible par ordinateur, comprenant des instructions qui, lorsqu'elles sont exécutées par un ordinateur, amènent celui-ci à mettre en oeuvre les étapes du procédé selon l'une des revendications 1 à 12.

Fig.: 1

**Bilanzierungssoftware**

FTP-Server

Ordner
WR1

Ordner
WR2

Ordner
WB

Waagen

Watchdog

51g

52g

19g

Datenbank

| Ordner | Name | Modus |
|--------|------|-------|
| WR1 | Waage Rohstoff1 | Rohstoff |
| WR2 | Waage Rohstoff2 | Rohstoff |
| WB | Waage Bilanzierung | Verpackung |

| Modusname | Soll | erlaubte Abweichung |
|-----------|------|---------------------|
| Rohstoff | 50g | 1g |
| Verpackung | 20g | 3g |

| Gewicht | Datum | Typ | Waage | Abweichung ok ? |
|---------|-------|-----|-------|-----------------|
| 51 | 12.10.20 | Rohstoff | Waage Rohstoff2 | Ja |
| 52 | 12.1020 | Rohstoff | Waage Rohstoff1 | Nein |
| 19 | 12.10.20 | Verpackung | Waage Bilanzierung | Ja |

Fig.: 2

EP 4 033 211 B1

Datenbank

| Ordner | Name | Modus |
|---|---|---|
| WR1 | Waage Rohstoff1 | Rohstoff |
| WR2 | Waage Rohstoff2 | Rohstoff |
| WB | Waage Bilanzierung | Verpackung |

| Modusname | Soll | erlaubte Abweichung |
|---|---|---|
| Rohstoff | 50g | 1g |
| Verpackung | 20g | 3g |

| Gewicht | Datum | Typ | Waage | Abweichung ok ? |
|---|---|---|---|---|
| 51 | 12.10.20 | Rohstoff | Waage Rohstoff2 | Ja |
| 52 | 12.1020 | Rohstoff | Waage Rohstoff1 | Nein |
| 19 | 12.10.20 | Verpackung | Waage Bilanzierung | Ja |

API

Frontend

- Anzeige der Daten
- Berechnung Bilanzierung
- Ändern Zuordnung von Waage und Modus

Fig.: 3

EP 4 033 211 B1

100

101

102

103

104

Fig.: 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1509752 B2
- DE 60214991 T2
- DE 102010055418 A1